Europäisches Patentamt

European Patent Office

Office européen des brevets

(19)

(11) Veröffentlichungsnummer: **0 026 491**
**B1**

(12) **EUROPÄISCHE PATENTSCHRIFT**

(45) Veröffentlichungstag der Patentschrift:
30.05.84

(21) Anmeldenummer: 80105860.3

(22) Anmeldetag: 27.09.80

(51) Int. Cl.³: **F 24 J 3/04**, F 24 J 3/02,
F 24 D 11/02, F 28 F 1/42,
F 28 F 1/36, F 28 F 1/40

(54) Anlage zur Wärmegewinnung unter Ausnutzung von Luft- und Sonnenenergie.

(30) Priorität: 29.09.79 DE 2939597

(43) Veröffentlichungstag der Anmeldung:
08.04.81 Patentblatt 81/14

(45) Bekanntmachung des Hinweises auf die Patenterteilung:
30.05.84 Patentblatt 84/22

(84) Benannte Vertragsstaaten:
AT CH LI

(56) Entgegenhaltungen:
CH - A - 571 197
DE - A - 2 431 162
DE - A - 2 554 140
DE - A - 2 609 113
DE - A - 2 648 086
DE - A - 2 817 821

R. GREGORIG, "Wärmeaustausch und
Wärmetauscher", 2. Auflage, 1973, Verlag Sauerländer
Aarau u. Frankfurt a. Main S. 735-736

(73) Patentinhaber: **Ritter Heiztechnik GmbH,
Weierstrasse 119, D-4200 Oberhausen (DE)**

(72) Erfinder: **Ritter, Karl, Peddenkamp 45,
D-4030 Ratingen 6 (DE)**

(74) Vertreter: **Gesthuysen, Hans Dieter, Dipl.-Ing.,
Huyssenallee 15, D-4300 Essen 1 (DE)**

ACTORUM AG

## Beschreibung

Die Erfindung betrifft eine Anlage zur Wärmegewinnung unter Ausnutzung von Luft- und Sonnenenergie, mit einem ersten Wärmetauscher zur Wärmeaufnahme, einem zweiten Wärmetauscher zur Wärmeabgabe und einer Umwälzpumpe, wobei der erste Wärmetauscher, der zweite Wärmetauscher und die Umwälzpumpe über Wärmeträgerleitungen zur Bildung eines Wärmeträgerkreislaufes miteinander verbunden sind, durch die Wärmeträgerleitungen ein Wärmeträgermedium geführt wird und in Durchflussrichtung des Wärmeträgermediums gesehen der erste Wärmetauscher vor dem zweiten Wärmetauscher angeordnet ist und wobei der erste Wärmetauscher mehrere mit Abstand voneinander angeordnete Wärmetauscherrohre aufweist.

Anlagen zur Wärmegewinnung unter Ausnutzung von Luft- und Sonnenenergie sind in verschiedenen Formen bekannt. Die meisten bislang bekannten Anlagen sind in erster Linie Anlagen zur Wärmegewinnung unter Ausnutzung von Sonnenenergie, bei denen nebenbei auch Luftenergie und ggf. Regenwasserenergie ausgenutzt wird. Bei einer dieser aus der Praxis bekannten Anlagen ist der erste Wärmetauscher flächig ausgeführt und auf dem Dach eines Gebäudes über dem Abdeckmaterial oder einen Teil des Abdeckmaterials ersetzend angeordnet. Die nach aussen weisende Fläche dieses Wärmetauschers ist dunkel eingefärbt und wirkt als Absorberfläche für Wärmestrahlung. Durch den Wärmetauscher wird direkt unterhalb der Absorberfläche das Wärmeträgermedium geführt, dessen Temperatur in der Regel um mehrere Grad unter der Temperatur der Umgebungsluft liegt. Diese Temperaturverhältnisse sind vorteilhaft, da so auch der Umgebungsluft über die Absorberfläche Wärme entzogen und an das Wärmeträgermedium abgegeben wird. Zusätzliche Wärme wird über die Absorberfläche aufgenommen, wenn bei Regen Regenwasser über den Wärmetauscher fliesst. Bei dieser Anlage ist insgesamt der Wirkungsgrad hinsichtlich der Ausnutzung von Luftenergie allerdings gleichwohl relativ schlecht.

Es ist allerdings auch schon eine Anlage der in Rede stehenden Art bekannt (vgl. die CH-PS 571 197), bei der Massnahmen getroffen worden sind, die eine bessere Ausnutzung von Luftenergie ermöglichen. Bei dieser Anlage, von der die Erfindung ausgeht, ist der erste Wärmetauscher so angeordnet, dass von einem Ventilator Luft um die Wärmetauscherrohre geblasen bzw. gezogen werden kann. Bei dieser Anlage wird im Ergebnis der Luft mehr Energie in Form von Wärme entzogen, als dem Ventilator in elektrischer Form zugeführt wird. Diese Anlage ist zwar hinsichtlich der Ausnutzung von Luftenergie schon günstiger als die zuvor angesprochenen, aus der Praxis bekannten Anlagen, jedoch noch nicht optimal, insbesondere da der Ventilator beständig Energie verbraucht. Ausserdem ist diese Anlage vom technischen Aufwand her, auch hier insbesondere wegen des notwendigerweise vorhandenen Ventilators, noch verbesserungsfähig.

Im übrigen sind Wärmetauscher als solche für vielfältige Anwendungen und in den verschiedensten Ausführungsformen bekannt, z.B. auch Rohrbündelwärmetauscher mit variablem Querschnitt für ein äusseres Fluid (vgl. Gregorig «Wärmeaustausch und Wärmeaustauscher», 2. Aufl. 1973, Verlag Sauerländer Aarau und Frankfurt am Main, Seite 735).

Schliesslich ist es für sich bekannt, Wärmetauscherrohre aussen und/oder innen mit wendelförmig durchlaufenden Rippen zu versehen (vgl. die DE-OS 2 554 140 bzw. die DE-OS 2 431 162), um die Wärmeübergangsverhältnisse zu verbessern.

Ausgehend von dem zuvor erläuterten Stand der Technik liegt der Erfindung die Aufgabe zugrunde, die bekannte, eingangs erläuterte Anlage zur Wärmegewinnung unter Ausnutzung von Luft- und Sonnenenergie so auszugestalten und weiterzubilden, dass eine bessere Ausnutzung der Luftenergie bei geringerem technischen Aufwand möglich ist.

Die erfindungsgemässe Anlage, bei der die zuvor aufgezeigte Aufgabe gelöst ist, ist dadurch gekennzeichnet, dass der erste Wärmetauscher separat aufstellbar ausgeführt, auf einem Sockel angeordnet, säulenartig ausgebildet und von Luft frei durchströmbar ist und dass die Wärmetauscherrohre auf der Mantelfläche eines Kegelstumpfes angeordnet und an einem Ende an einen Vorlaufverteiler und am anderen Ende an einen Rücklaufsammler angeschlossen sind.

Erfindungsgemäss ist zunächst erkannt worden, dass eine separate Aufstellung des ersten Wärmetauschers gegenüber der Anordnung auf oder an einem Gebäude trotz eines auf den ersten Blick scheinbar grösseren technischen Aufwandes erhebliche Vorteile mit sich bringt. Zunächst kann der separat aufgestellte erste Wärmetauscher dort hingestellt werden, wo die maximalen Luftgeschwindigkeiten zu erwarten sind. Hohe Luftgeschwindigkeiten bedeuten aber einen hohen Wirkungsgrad bei der Ausnutzung der Luftenergie, d.h. einen guten Wirkungsgrad der Anlage insgesamt. Dadurch, dass der erste Wärmetauscher von Luft frei durchströmbar ist, kann auf einen Ventilator bzw. ein Hilfsgebläse in den meisten Fällen verzichtet werden. Hierbei kommt der säulenartigen Ausbildung des separat aufstellbar ausgeführten ersten Wärmetauschers eine besondere Bedeutung zu. Einerseits macht die säulenartige Ausbildung des Wärmetauschers diesen weitgehend davon abhängig, welche Richtung eine Luftbewegung hat, anderseits führt die säulenartige Ausbildung zu einer umgekehrten Kaminwirkung, so dass auch bei sehr geringen Luftgeschwindigkeiten durch den Wärmetauscher selbst eine Luftbewegung in Gang gesetzt bzw. aufrechterhalten wird. In diesem Zusammenhang nun kommt der Anordnung der Wärmetauscherrohre auf der Mantelfläche eines Kegelstumpfes eine entscheidende Bedeutung zu. Bei der erwähnten umgekehrten Kaminwirkung fällt nämlich die Luft, der durch das Wärmeträgermedium –

über die Wärmetauscherrohre – Wärme entzogen worden ist, die also kälter geworden ist. Dadurch kann es im unteren Bereich des säulenartig ausgebildeten Wärmetauschers zu einem Stau kalter Luft kommen, wobei aber nun durch die Anordnung der Wärmetauscherrohre auf der Mantelfläche eines Kegelstumpfes gerade in diesem Bereich grössere Abstände zwischen den Wärmetauscherrohren gegeben sind. Dadurch kann die kalte Luft hier besser seitlich abfliessen bzw. bei einem in der Mitte offenen Sockel, über einen grösseren Querschnitt nach unten abströmen.

Wenn zuvor gesagt worden ist, dass die Wärmetauscherrohre auf der Mantelfläche eines Kegelstumpfes angeordnet sein können, so braucht es sich hier nicht um einen Kreiskegel zu handeln, sondern auch eine rechteckige oder dreieckige oder sonstige Querschnittsform des Kegelstumpfes ist denkbar, insbesondere ist denkbar, dass die Wärmetauscherrohre auf der Mantelfläche eines Pyramidenstumpfes angeordnet sind.

Aus praktischen Versuchen hat sich ergeben, dass es besonders zweckmässig ist, wenn der Kegelbasiswinkel des Kegelstumpfes, auf dessen Mantelfläche die Wärmetauscherrohre angeordnet sind, grösser als 70°, vorzugsweise grösser als 80°, insbesondere etwa 85° ist.

Bei der bekannten Anlage, von der die Erfindung ausgeht, sind die Wärmetauscherrohre des ersten Wärmetauschers senkrecht und parallel zueinander angeordnet. Eine solche Ausgestaltung ist auch, entsprechend angepasst, für die erfindungsgemässe Anlage möglich, wobei dann also die Wärmetauscherrohre des ersten Wärmetauschers im wesentlichen senkrecht angeordnet sind. Das über die Wärmeträgerleitungen zugeführte kalte Wärmeträgermedium wird dabei über den Vorlaufverteiler auf die einzelnen Wärmetauscherrohre verteilt und nach Durchlaufen der Wärmetauscherrohre im Rücklaufsammler wieder gesammelt, um, nunmehr aufgewärmt, über eine weitere Wärmeträgerleitung dem zweiten Wärmetauscher zugeführt zu werden. Als Wärmeträgermedium kommt hier beispielsweise mit einem Frostschutzmittel versetztes Wasser in Frage, beispielsweise aber auch ein gasförmiges Wärmeträgermedium wie Frigen od. dgl. In äquivalenter Weise können die Wärmetauscherrohre auch im wesentlichen waagrecht angeordnet sein, wobei sie dann gewissermassen ringförmig mit Abstand voneinander übereinandergeschichtet sind. Auch hier muss ein Vorlaufverteiler und ein Rücklaufsammler vorgesehen sein.

Wesentlich ist bei allen zuvor erläuterten Ausführungsformen einer erfindungsgemässen Anlage, dass stets im unteren Bereich des Wärmetauschers durch die kegelstumpfförmige Anordnung der Wärmetauscherrohre bzw. des Wärmetauscherrohres ein Stau kalter Luft nicht auftreten kann, dass nämlich die kalte Luft dort leicht seitlich oder nach unten abfliessen kann. Dadurch wird verhindert, dass sich an den Wärmetauscherrohren, von unten beginnend, Reif und Eis bildet, was ansonsten die Funktionsfähigkeit des Wärmetauschers erheblich stören würde. Die Gesamtkonstruktion des ersten Wärmetauschers bei der erfindungsgemässen Anlage erlaubt es, auf einen Ventilator praktisch in allen Fällen zu verzichten, da dieser Wärmetauscher gewissermassen selbstventilierend ist.

Zur Verbesserung der Wärmeübergangsverhältnisse empfiehlt es sich, wie an sich bekannt, die Wärmetauscherrohre aussen mit vorzugsweise wendelförmig durchlaufenden Rippen zu versehen.

Nach einer weiteren Lehre der Erfindung, die auch losgelöst von den zuvor beschriebenen Massnahmen zu einer Verbesserung der Ausnutzung der Luftenergie führt, sind, wie an sich bekannt, die Wärmetauscherrohre innen mit vorzugsweise wendelförmig durchlaufenden Rippen versehen.

Für die insgesamt angestrebte optimale Ausnutzung der Luftenergie kommt es einerseits auf den Temperaturunterschied zwischen der Luft und dem Wärmeträgermedium, anderseits auf die Wärmeübergangszahl zwischen der Luft und dem Wärmeträgermedium und damit einerseits zwischen der Luft und den Wärmetauscherrohren und anderseits zwischen den Wärmetauscherrohren und dem Wärmeträgermedium an. Da der wirksame Temperaturunterschied zwischen der Luft und dem Wärmeträgermedium kaum beeinflusst werden kann, muss also eine besonders gute Wärmeübergangszahl angestrebt werden, wenn eine optimale Ausnutzung der Luftenergie angestrebt wird. Hierzu ist festzuhalten, dass das Versehen der Wärmetauscherrohre aussen mit vorzugsweise wendelförmig durchlaufenden Rippen die Strömung der Luft durch die erfindungsgemässe Anlage positiv beeinflusst, nämlich die Wärmeübergangszahl zwischen der Luft und den Wärmetauscherrohren positiv beeinflusst. Das Versehen der Wärmetauscherrohre innen mit vorzugsweise wendelförmig durchlaufenden Rippen verbessert die Wärmeübergangszahl zwischen den Wärmetauscherrohren und dem Wärmeträgermedium zunächst dadurch, dass solche Rippen zu einer turbulenten Strömung des Wärmetauschermediums führen. Ausserdem empfiehlt es sich, die Rippen nahe der Innenwandung der Wärmetauscherrohre vorzusehen, – damit dem Wärmeträgermedium insbesondere nahe der Innenwandung der Wärmetauscherrohre die für eine gute Wärmeübergangszahl gewünschte turbulente Strömung aufgezwungen wird. Werden die Rippen an der Innenwandung der Wärmetauscherrohre vorgesehen, so dass zwischen den Wärmetauscherrohren und den Rippen Wärmeleitung stattfinden kann, so führt das zu einer weiteren Verbesserung der Wärmeübergangszahl zwischen den Wärmetauscherrohren und dem Wärmeträgermedium. Anstelle von nahe der Innenwandung der Wärmetauscherrohre vorgesehenen Rippen, insbesondere aber zusätzlich zu nahe der Innenwandung der Wärmetauscherrohre vorgesehenen Rippen können im Kernbereich der Wärmetauscherrohre Rippen vorgesehen sein. Kernbereich meint dabei den inneren Bereich der Wärmetauscherrohre, der sich etwa über ein Viertel bis zur Hälfte des Durchmessers der Wärmetauscherrohre erstreckt. Dabei können die Rippen den Kernbereich der Wärmetauscherrohre ausfüllen. Vorzugsweise sind die Rippen jedoch nur im Aussenbereich des Kernbereiches der Wärmetauscherrohre angeordnet, – so dass der Innenbereich des Kernbereiches der Wärmetauscherrohre keine Rippen aufweist.

Bei der erfindungsgemässen Anlage zur Wärmegewinnung empfiehlt es sich, oberhalb der Wärmetauscherrohre einen Regenwassersammler anzuordnen und vorzugsweise diesen Regenwassersammler mit einer verschliessbaren Abtropföffnung zu versehen. In dem Regenwassersammler wird Regenwasser gesammelt und über die Abtropföffnung auf die Wärmetauscherrohre bzw. die Rippen der Wärmetauscherrohre gebracht. Hier hat sich eine wendelförmige Ausführung der Rippen als besonders vorteilhaft erwiesen, da das Regenwasser auf diesen Rippen einfach herablaufen kann. Befindet sich der erste Wärmetauscher der erfindungsgemässen Anlage in der Nähe eines Gebäudes, so kann ohne weiteres das in den Dachrinnen des Gebäudes gesammelte Regenwasser anstatt direkt der Kanalisation nunmehr den Regenwassersammler des ersten Wärmetauschers zugeführt werden. Die verschliessbare Abtropföffnung erlaubt es, das im Regenwassersammler gesammelte Regenwasser als Wärmespeicher zu verwenden, d.h. beispielsweise am Tage zu sammeln und in den Abendstunden über die Wärmetauscherrohre laufen zu lassen. Selbstverständlich könnte hier notwendigenfalls auch ein gesondertes Sammelbecken vorgesehen sein, von dem aus das Regenwasser ggf. über eine Pumpe der Energiesäule zugeführt wird.

Mitunter kommt es vor, dass die Luftgeschwindigkeiten in der Umgebungsluft unter ca. 1,5 m/s absinken. Die Tatsache, dass unterhalb dieses Geschwindigkeitswertes der Wirkungsgrad des Wärmeüberganges von der Umgebungsluft auf das Wärmeträgermedium rapide abnimmt, kann dadurch berücksichtigt werden, dass, wie an sich bekannt, ein Hilfsgebläse vorgesehen ist. Dieses Hilfsgebläse wird z.B. dann eingeschaltet, wenn die Windgeschwindigkeit am ersten Wärmetauscher den Wert von 1,5 m/s unterschreitet. Es hat sich gezeigt, dass auch bei vollständiger Windstille schon ein Hilfsgebläse von 500 Watt Leistung bei entsprechender Dimensionierung der Wärmetauscherrohre und entsprechend gewählter Durchflussrate des Wärmeträgermediums zu einer Wärmeaufnahme von 5000 kcal führt. Es empfiehlt sich hier, zur Steuerung des Hilfsgebläses einen Windmesser vorzusehen.

Im folgenden wird die Erfindung anhand einer lediglich ein Ausführungsbeispiel darstellenden Zeichnung näher erläutert; es zeigt

Fig. 1 schematisch, teilweise mit Symbolen, ein Ausführungsbeispiel einer erfindungsgemässen Anlage zur Wärmegewinnung unter Ausnutzung von Luft- und Sonnenenergie und

Fig. 2 einen Schnitt durch den Gegenstand nach Fig. 1 längs der Linie II–II.

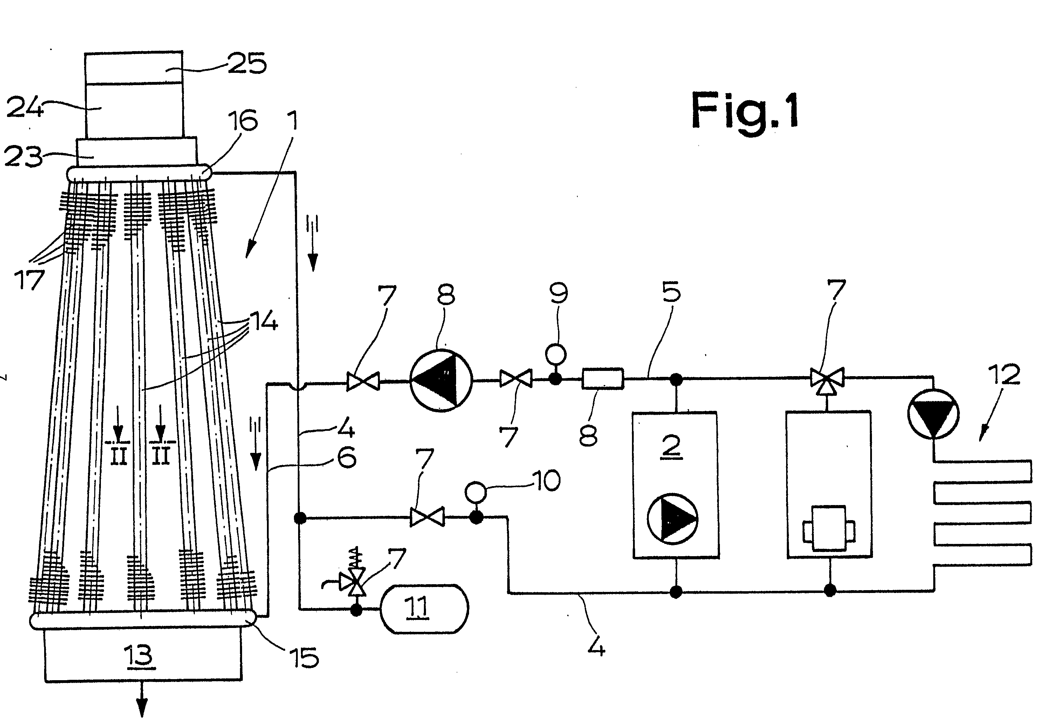

Die in Fig. 1 gezeigte Anlage zur Wärmegewinnung unter Ausnutzung von Luft- und Sonnenenergie weist zunächst einen ersten Wärmetauscher 1 zur Wärmeaufnahme, einen zweiten Wärmetauscher 2 zur Wärmeabgabe und eine Umwälzpumpe 3 auf. Der erste Wärmetauscher 1, der zweite Wärmetauscher 2 und die Umwälzpumpe 3 sind über Wärmeträgerleitungen 4, 5, 6 zur Bildung eines Wärmeträgerkreislaufes miteinander verbunden. In dem Wärmeträgerkreislauf sind im übrigen Ventile 7 und ein Durchflussmengenregler 8 angeordnet. Mit dem Wärmeträgerkreislauf verbunden sind ein Vorlaufthermometer 9 und ein Rücklaufthermometer 10 sowie ein Ausgleichsbehälter 11. Durch die Wärmeträgerleitungen 4, 5, 6 wird ein Wärmeträgermedium geführt. In Durchflussrichtung des Wärmeträgermediums ist, wie Fig. 1 deutlich zeigt, der erste Wärmetauscher 1 vor dem zweiten Wärmetauscher 2 angeordnet. In Fig. 1 ist angedeutet, dass der zweite Wärmetauscher 2 als Wärmepumpe ausgeführt ist und dass diesem zweiten Wärmetauscher 2 als Wärmeverbraucher 12 eine Warmwasserheizung nachgeschaltet ist.

Der erste Wärmetauscher 1 ist separat aufstellbar ausgeführt und säulenartig ausgebildet. Dazu weist der erste Wärmetauscher 1 auf einem Sokkel 13 mehrere im wesentlichen senkrecht und im wesentlichen parallel zueinander und mit Abstand voneinander angeordnete Wärmetauscherrohre 14 auf. Am einen Ende der Wärmetauscherrohre 14 ist ein Vorlaufverteiler 15 angeordnet, am anderen Ende ein Rücklaufsammler 16. Bei dem in Fig. 1 dargestellten Ausführungsbeispiel sind die Wärmetauscherrohre 14 auf der Mantelfläche eines Kegelstumpfes angeordnet, dessen Kegelbasiswinkel etwa 85° ist.

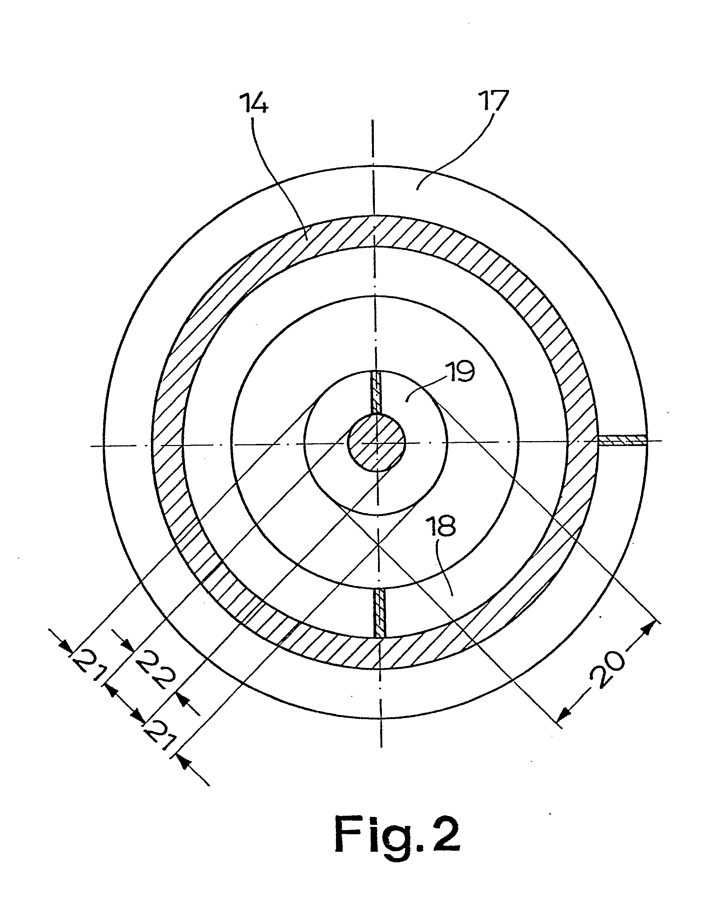

Wie insbesondere Fig. 2 zeigt, sind die Wärmetauscherrohre 14 aussen mit wendelförmig durchlaufenden Rippen 17 und innen mit wendelförmig durchlaufenden Rippen 18, 19 versehen. Dabei sind die Rippen 18 nahe der Innenwandung der Wärmetauscherrohre 14, nämlich an der Innenwandung der Wärmetauscherrohre 14, vorgesehen, – so dass zwischen den Wärmetauscherrohren 14 und den Rippen 18 Wärmeleitung stattfinden kann. Die Rippen 19 sind im Kernbereich 20 der Wärmetauscherrohre 14, und zwar im Aussenbereich 21 des Kernbereiches 20 der Wärmetauscherrohre 14, angeordnet, – so dass der Innenbereich 22 des Kernbereiches 20 der Wärmetauscherrohre 14 frei ist.

Wie die Fig. 1 zeigt, ist oberhalb der Wärmetauscherrohre 14 ein Regenwassersammler 23 angeordnet. Das Regenwasser nahestehender Gebäude kann dem Regenwassersammler 23 zugeführt und in diesem gesammelt werden. Nicht dargestellt ist, dass der Regenwassersammler 23 mit einer verschliessbaren Abtropföffnung versehen ist, von der aus das Regenwasser über die Rippen 17 der Wärmetauscherrohre 14 geleitet werden kann.

Schliesslich ist in Fig. 1 noch schematisch angedeutet, dass ein Hilfsgebläse 24 vorgesehen ist. Das Hilfsgebläse 24 sitzt oberhalb des Regenwassersammlers 23 am Kopf des ersten Wärmetauschers 1 und ist über einen nicht dargestellten Luftschacht mit dem von den Wärmetauscherrohren 14 umschlossenen Innenraum verbunden. Zur Steuerung des Hilfsgebläses 24 ist ein Windmesser 25 vorgesehen.

Die in Fig. 1 dargestellte Anlage zur Wärmegewinnung arbeitet folgendermassen:

Kühles Wärmeträgermedium mit einer Temperatur deutlich unterhalb der Umgebungstemperatur, d.h. etwa 5 bis 6 K unterhalb der Umgebungstemperatur, wird von der Umwälzpumpe 3 durch die Wärmeträgerleitung 6 in den ersten Wärmetauscher 1 gepumpt. Im ersten Wärmetauscher 1 wird das zugeführte Wärmeträgermedium in dem Vorlaufverteiler 15 auf die einzelnen Wärmetauscherrohre 14 verteilt und mit einer bestimmten Geschwindigkeit durch die Wärmetauscherrohre 14 geführt. Das aus den Wärmetauscherrohren 14 austretende Wärmeträgermedium wird im Rücklaufsammler 16 gesammelt und über die Wärmeträgerleitung 4 dem zweiten Wärmetauscher 2 zugeführt. Während des Durchlaufens des Wärmeträgermediums durch die Wärmetauscherrohre 14 ist das Wärmeträgermedium aufgewärmt worden. Die aufgenommene Wärme wird dem Wärmeträgermedium in dem zweiten Wärmetauscher 2, der als Wärmepumpe ausgeführt ist, wieder entzogen und in dem Wärmeverbraucher 12 verwertet.

Der Wärmeübergang aus der Umgebungsluft an das Wärmeträgermedium ist durch die Rippen 17, 18 und 19 ausgesprochen hoch.

Bei Windgeschwindigkeiten unterhalb von etwa 1,5 m/s wird, gesteuert vom Windmesser 25, das Hilfsgebläse 24 eingeschaltet, das einen Luftstrom in den von den Wärmetauscherrohren 14 umschlossenen Innenraum im Wärmetauscher 1 führt, der zwischen den Wärmetauscherrohren 14 radial nach aussen austritt. Auf diese Weise ist es möglich, auch bei sehr geringen Luftgeschwindigkeiten die vorhandene Luftenergie auszunutzen.

**Patentansprüche**

1. Anlage zur Wärmegewinnung unter Ausnutzung von Luft- und Sonnenenergie, mit einem ersten Wärmetauscher (1) zur Wärmeaufnahme, einem zweiten Wärmetauscher (2) zur Wärmeabgabe und einer Umwälzpumpe (3), wobei der erste Wärmetauscher (1), der zweite Wärmetauscher (2) und die Umwälzpumpe (3) über Wärmeträgerleitungen (4, 5, 6) zur Bildung eines Wärmeträgerkreislaufes miteinander verbunden sind, durch die Wärmeträgerleitungen (4, 5, 6) ein Wärmeträgermedium geführt wird und in Durchflussrichtung des Wärmeträgermediums gesehen der erste Wärmetauscher (1) vor dem zweiten Wärmetauscher (2) angeordnet ist und wobei der erste Wärmetauscher (1) mehrere mit Abstand voneinander angeordnete Wärmetauscherrohre (14) aufweist, dadurch gekennzeichnet, dass der erste Wärmetauscher (1) separat aufstellbar ausgeführt, auf einem Sockel (13) angeordnet, säulenartig ausgebildet und von Luft frei durchströmbar ist und dass die Wärmetauscherrohre (14) auf der Mantelfläche eines Kegelstumpfes angeordnet und an einem Ende an einen Vorlaufverteiler (15) und am anderen Ende an einen Rücklaufsammler (16) angeschlossen sind.

2. Anlage nach Anspruch 1, dadurch gekennzeichnet, dass der Kegelbasiswinkel des Kegelstumpfes, auf dessen Mantelfläche die Wärmetauscherrohre (14) angeordnet sind, grösser als 70°, vorzugsweise grösser als 80°, insbesondere etwa 85° ist.

3. Anlage nach Anspruch 1 oder 2, dadurch gekennzeichnet, dass die Wärmetauscherrohre des ersten Wärmetauschers im wesentlichen waagrecht angeordnet sind.

4. Anlage nach einem der Ansprüche 1 bis 3, dadurch gekennzeichnet, dass die Wärmetauscherrohre (14) aussen mit vorzugsweise wendelförmig durchlaufenden Rippen (17) versehen sind.

5. Anlage nach einem der Ansprüche 1 bis 4, dadurch gekennzeichnet, dass die Wärmetauscherrohre (14) innen mit vorzugsweise wendelförmig durchlaufenden Rippen (18, 19) versehen sind.

6. Anlage nach Anspruch 5, dadurch gekennzeichnet, dass die Rippen (18) nahe der Innenwandung der Wärmetauscherrohre (14), vorzugsweise an der Innenwandung der Wärmetauscherrohre (14) vorgesehen sind.

7. Anlage nach Anspruch 5 oder 6, dadurch gekennzeichnet, dass die Rippen (18) bzw. dass zusätzliche Rippen (19) im Kernbereich (20) der Wärmetauscherrohre (14) vorgesehen sind.

**Claims**

1. System for the recovery of heat by utilization of air- and solar-energy, comprising a first heat exchanger (1) for heat absorption, a second heat exchanger (2) for heat dissipation, and a circulation pump (3), the first heat exchanger (1), the second heat exchanger (2), and the circulation pump (3) being connected with each other by heat transfer lines (4, 5, 6) to form a heat transfer circuit, a heat transfer medium being circulated in the heat transfer circuit through the heat transfer lines (4, 5, 6), and the first heat exchanger (1) being arranged ahead of the second heat exchanger (2) with respect to the direction of flow of the heat transfer medium, the first heat exchanger (1) comprising a couple of exchanger tubes (14), characterised in that the first heat exchanger (1) is separately erectable and arranged on a base (13) in a columnar manner to be freely ventilatable by air and in that the exchanger tubes (14) are arranged as on the surface area of a conic frustum, being connected at one end to an inlet-distributor (15) and at the other end to an outlet-collector (16).

2. System as described in claim 1, characterised in that the base angle of the conic frustum the exchanger tubes (14) are arranged on is larger than 70°, preferably larger than 80°, particularly approximately 85°.

3. System as described in claim 1 or 2, characterised in that the exchanger tubes of the first heat exchanger are arranged horizontally.

4. System as in one of the claims 1 through 3, characterised in that the outside of the exchanger tubes (14) is ribbed, particularly by providing helically circulating ribs (17).

5. System as in one of the claims 1 through 4, characterised in that inside the exchanger tubes (14) ribs (18, 19), particularly helically circulating ribs (18, 19), are provided.

6. System as described in claim 5, characterised in that the ribs (18) inside the exchanger tubes (14) are arranged next to the inner surface of the exchanger tubes (14), preferably at the inner surface of the exchanger tubes (14).

7. System as described in claim 5 or 6, characterised in that the ribs (18) or additional ribs (19) are arranged in the centers (20) of the exchanger tubes (14).

**Revendications**

1. Installation de récupération de chaleur utilisant l'énergie de l'air et l'énergie solaire comportant un premier échangeur de chaleur (1) servant à récupérer de la chaleur, un second échangeur de chaleur (2) servant à délivrer de la chaleur et une pompe de circulation (3), le premier échangeur de chaleur (1), le second échangeur de chaleur (2) et la pompe de circulation (3) étant reliés entre eux par l'intermédiaire de canalisations pour un fluide caloporteur (4, 5, 6) destiné à former un circuit du fluide caloporteur et au moyen desquelles un fluide caloporteur est véhiculé, et dans laquelle le premier échangeur de chaleur (1) est disposé en amont du second échangeur de chaleur (2), par rapport à la direction d'écoulement du fluide caloporteur, et dans laquelle le premier échangeur de chaleur (1) comporte plusieurs tubes d'échange thermique (16) situés à distance les uns des autres, caractérisée en ce que le premier échangeur de chaleur (1) est réalisé de manière à pouvoir être installé séparément, est disposé sur un socle (13), est réalisé à la manière d'une colonne qui peut être traversée librement par l'air, et que les tubes d'échange thermique (14) sont disposés sur la surface enveloppe d'un tronc de cône et sont raccordés, au niveau d'une extrémité, à un répartiteur aller (15) et, à l'autre extrémité, à un collecteur de retour (16).

2. Installation selon la revendication 1, caractérisée par le fait que l'angle à la base du tronc de cône, sur la surface enveloppe duquel sont disposés les tubes d'échange thermique (14), est supérieur à 70° et de préférence supérieur à 80°, et notamment est égal à environ 85°.

3. Installation selon la revendication 1 ou 2, caractérisée en ce que les tubes d'échange thermique du premier échangeur de chaleur sont disposés en étant essentiellement horizontaux.

4. Installation selon l'une des revendications 1 à 3, caractérisée en ce que les tubes d'échange thermique (14) sont équipés extérieurement de nervures (17) s'étendant de préférence avec une forme hélicoïdale.

5. Installation selon l'une quelconque des revendications 1 à 4, caractérisée en ce que les tubes d'échange thermique (14) sont équipés intérieurement de nervures (18, 19) s'étendant de préférence avec une forme hélicoïdale.

6. Installation selon la revendication 5, caractérisée en ce que les nervures (18) sont prévues à proximité de la paroi intérieure des tubes d'échange thermique (14), de préférence contre la paroi intérieure de ces tubes.

7. Installation selon la revendication 5 ou 6, caractérisée en ce que les nervures (18) ou des nervures supplémentaires (19) sont prévues dans la région centrale (20) des tubes d'échange thermique (14).

Fig.1

0 026 491

**Fig.2**